# EUROPÄISCHE PATENTSCHRIFT

(11) **EP 1 429 708 B1**
(45) Veröffentlichungstag und Bekanntmachung des Hinweises auf die Patenterteilung: **23.03.2005**
(21) Anmeldenummer: 02772315.4
(22) Anmeldetag: 17.09.2002
(51) Int. Cl.: A61G 13/10, F16M 13/02, F16B 2/10

(54) **BEFESTIGUNGSKLOBEN ZUR HALTERUNG VON GEGENSTÄNDEN AN EINER PROFILSCHIENE**
FASTENING BLOCK FOR MOUNTING OBJECTS ON A PROFILED RAIL
BLOC DE FIXATION POUR FIXER DES OBJETS A UN RAIL PROFILE

(30) Priorität: 27.09.2001 DE 10147588
(43) Veröffentlichungstag der Anmeldung: 23.06.2004
(73) Patentinhaber: MAQUET GmbH & Co. KG, 76437 Rastatt (DE)
(72) Erfinder: ROPERTZ, Frank, 76530 Baden-Baden (DE); MERKEL, Lothar, 76473 Iffezheim (DE); PFEUFFER, Reinhard, 76477 Elchesheim-Illingen (DE)
(74) Vertreter: Schaumburg, Thoenes, Thurn, Landskron
(86) Internationale Anmeldenummer: PCT/EP2002/010438
(87) Internationale Veröffentlichungsnummer: WO 2003/028612

(56) Entgegenhaltungen:
- DE-U- 29 922 147
- FR-A- 1 477 088
- US-A- 4 796 846
- US-A- 5 538 215

## Beschreibung

Die Erfindung betrifft einen Befestigungskloben zur Halterung von Gegenständen an einer Profilschiene mit mindestens annähernd rechteckigem Querschnitt, umfassend ein Gehäuseteil mit mindestens einer gehäusefesten Klaue, die zum Übergreifen der Profilschiene bestimmt ist, derart, daß das Gehäuseteil mit zur Profilschiene parallelen Anlageflächen an mindestens zwei Flächen der Profilschiene anliegt, ein L-förmiges bewegliches Klemmteil, das mit einem ersten L-Schenkel um eine zu den Anlageflächen parallele erste Achse an dem Gehäuseteil schwenkbar gelagert und mittels einer Feder in eine Klemmstellung vorgespannt ist, in der es mit seinem als Klaue ausgebildeten zweiten L-Schenkel die Profilschiene umgreift, und eine Spannvorrichtung zum Spannen und Arretieren des Klemmteiles in der Klemmstellung.

Ein Befestigungskloben der vorstehend genannten Art ist beispielsweise aus der DE-A-31 49 215 bekannt. Derartige Befestigungskloben dienen beispielsweise zur Halterung von Zusatzgeräten an einem Operationstisch. Dabei muß darauf geachtet werden, daß diese Zusatzgeräte zuverlässig an der Profilschiene gehalten werden und daß der Befestigungskloben schnell und einfach zu betätigen ist.

Bei der bekannten Ausführungsform ist das Klemmteil auf einem bezüglich der Schwenkachse exzentrischen Zylinderabschnitt eines Bolzens gelagert, der mit einem Verstellelement drehfest verbunden ist. Aufgrund dieser Lagerung des Klemmstückes läßt sich dieses nicht nur gegenüber dem Gehäuseteil verschwenken, sondern auch senkrecht zu seiner Schwenkachse verrücken. Das gibt die Möglichkeit, den Befestigungskloben mit Spiel an die Profilschiene anzusetzen und dann das Klemmstück durch eine Drehung des Bolzens unter Beseitigung des Spiels an die Profilschiene heranzuziehen, so daß ein spielfreier Sitz des Befestigungsklobens an der Profilschiene gewährleistet ist.

Bei dem bekannten Befestigungskloben ist das Gehäuseteil mit dem jeweiligen Zubehörteil, das an dem Operationstisch angebracht werden soll, stoffschlüssig verbunden, d.h. beispielsweise verschweißt. Dadurch, daß sich der Lagerbolzen für das Klemmteil durch zwei zueinander parallele Flächen des Gehäuseteils erstreckt, stehen nur relativ wenige Flächen an dem Gehäuseteil zur Verbindung mit einem Zubehörteil zur Verfügung. Auch kann derselbe Befestigungskloben nicht wahlweise mit unterschiedlichen Zubehörteilen verbunden werden.

Der Erfindung liegt die Aufgabe zugrunde, einen Befestigungskloben der eingangs genannten Art anzugeben, der vielseitig verwendbar ist, einen sicheren Halt an der Profilschiene gewährleistet und auf einfache Weise und rasch zu betätigen ist.

Diese Aufgabe wird erfindungsgemäß dadurch gelöst, daß an einem radial zur ersten Achse gerichteten Betätigungsfortsatz des ersten L-Schenkels des Klemmteiles um eine zur ersten Achse parallele zweite Achse eine Zugstange schwenkbar angelenkt ist, die sich annähernd parallel zu dem zweiten L-Schenkel erstreckt, und daß die Spannvorrichtung eine Spannschraube hat, die mit der Zugstange zugfest gekoppelt ist und sich direkt oder indirekt an dem Gehäuseteil abstützt. Der erfindungsgemäße Befestigungskloben gewährleistet ebenso wie der aus der DE-A-31 49 215 bekannte Befestigungskloben einen sicheren Halt an der Profilschiene, auch ohne daß das Klemmteil gespannt und arretiert wird. Die erfindungsgemäße Lösung bietet aber insofern eine höhere Sicherheit, als die Spannschraube nicht durch eine zufällige Bewegung soweit gelockert werden kann, daß der Befestigungskloben von der Profilschiene abgehoben werden kann. Bei der bekannten Lösung, bei welcher das Klemmteil nur durch eine 90°-Drehung eines Exzenterbolzens gespannt wird, kann dieser durch eine unbeabsichtigte Bewegung aus der Spannstellung in seine Freigabestellung verstellt und somit der Befestigungskloben gelockert werden. Bei der erfindungsgemäßen Lösung bildet ferner der erste L-Schenkel einen zweiarmigen Hebel, an dessen einem Ende der an der Profilschiene anliegende zweite L-Schenkel befestigt ist und an dessen anderem Ende die Zugstange angreift. In Verbindung mit der Gewindeübersetzung der Spannschraube kann damit auf einfache Weise ein sehr hohes Klemmoment auf das Klemmteil übertragen werden. Ein weiterer Vorteil der erfindungsgemäßen Lösung liegt darin, daß die Spannvorrichtung lediglich eine Fläche des Gehäuseteils beansprucht, so daß die übrigen Flächen des Gehäuseteils zur stoffschlüssigen Verbindung mit einem zu haltenden Zubehörteil zur Verfügung stehen.

Bei einer bevorzugen Ausführungsform ist die Zugstange mit einer Spannhülse der Spannvorrichtung gekoppelt, die in einer zur Zugstangenachse co-axialen Gehäuseführung axial verschiebbar geführt ist, in einem aus dem Gehäuseteil mindestens teilweise herausragenden Abschnitt eine senkrecht zu ihrer Achse gerichtete Durchbrechung hat und die an ihrem axial äußeren Ende eine co-axiale, die Durchbrechung schneidende Gewindebohrung hat, in die die mit einem Handgriff versehene Spannschraube eingreift.

Diese Lösung bietet die Möglichkeit, in die Durchbrechung der Spannhülse eine mit dem zu halternden Zubehör verbundene Stange einzuführen und mit der Spannschraube nicht nur das Klemmteil zu spannen, sondern auch die mit dem Zubehörteil verbundene Stange einzuspannen. Dabei wird die Stange gegen das äußere Ende der Gehäuseführung gedrückt, das von einem Rohrabschnitt gebildet sein kann, in dem eine zum äußeren axialen Ende des Rohrabschnittes hin offene Aussparung ausgebildet ist, die bei einer axialen Verschiebung der Spannhülse mit einem Teil des Durchbrechungsquerschnittes zur Deckung gebracht wird. Die eingespannte Stange durchsetzt also nicht nur die Durchbrechung in der Spannhülse sondern greift auch in die Aussparung in dem Rohrabschnitt der Gehäuseführung ein, so daß sie in ihrer Lage relativ zu dem Gehäuseteil festgelegt ist.

Der Rohrabschnitt kann als Zahnring ausgebildet sein, der lösbar mit dem Gehäuseteil verbunden ist und an seinem dem Gehäuseteil zugewandten Ende eine Zahnung hat, die mit einer Gegenzahnung am Gehäuseteil in Eingriff steht. Dies ermöglicht ein Verdrehen des Rohrabschnittes relativ zum Gehäuseteil und damit ein Ändern der Lage eines Zubehörteiles relativ zu dem Gehäuseteil des Befestigungsklobens, wobei durch den Eingriff der Zahnung und der Gegenzahnung die jeweilige Lage des Rohrabschnittes zuverlässig fixierbar ist.

Die Zugstange hat vorzugsweise an ihrem freien Ende einen gegenüber dem Stangenschaft radial breiteren Kopf, dessen dem Stangenschaft zugewandte Fläche als Kugelflächenabschnitt ausgebildet und zur Anlage an einer die Zugstange ringförmig umgebenden komplementär geformten Lagerfläche der Spannhülse bestimmt ist. Damit kann nicht nur die Spannhülse um die Achse der Zugstange verdreht werden, um beispielsweise die Stellung eines eingespannten Zubehörteiles relativ zu dem Befestigungskloben zu verändern, sondern ermöglicht auch eine Schwenkbewegung der Zugstange relativ zu der Spannhülse, da die Zugstange bei einer Verstellung des Klemmteiles nicht nur eine reine Axialbewegung sondern auch eine Schwenkbewegung ausführt, wogegen die Spannhülse in der Gehäuseführung nur axial verschiebbar ist.

Bei einer zweiten Ausführungsform des erfindungsgemäßen Befestigungsklobens, die für eine stoffschüssige Verbindung des Gehäuseteiles mit einem Zubehörteil bestimmt ist, steht die Spannschraube in direktem Gewindeeingriff mit der Zugstange. Hierzu umfaßt die Spannschraube beispielsweise eine sich an dem Gehäuseteil drehbar abstützende und mit einem Handgriff versehene Gewindehülse, die ein Innengewinde hat, in das die mit einem Außengewinde versehene Zugstange eingreift. Um auch hier eine gleichzeitige Axial- und Schwenkbewegung der Zugstange bei der Verstellung des Klemmteiles zu ermöglichen, ist die Abstützfläche der Gewindehülse zweckmäßigerweise als Kugelflächenabschnitt ausgebildet, der an einer komplementär geformten Lagerfläche des Gehäuseteils anliegt.

Weitere Merkmale und Vorteile der Erfindung ergeben sich aus der folgenden Beschreibung, welche in Verbindung mit den beigefügten Zeichnungen die Erfindung anhand von zwei Ausführungsbeispielen erläutert. Es zeigen:
- Fig. 1: eine teilweise schematische perspektivische Ansicht einer ersten Ausführungsform eines erfindungsgemäßen Befestigungsklobens,
- Fig. 2: einen die Achse der Spannschraube enthaltenden und senkrecht zur Schwenkachse des Klemmteils gerichteten Schnitt durch den Befestigungskloben entlang Linie II-II in Fig.1,
- Fig. 3: eine der Fig. 1 entsprechende Ansicht einer zweiten Ausführungsform des erfindungsgemäßen Befestigungsklobens und
- Fig. 4: einen im Schnitt gemäß Fig. 2 entsprechenden Schnitt durch den Befestigungskloben entlang Linie IV-IV in Fig. 3.

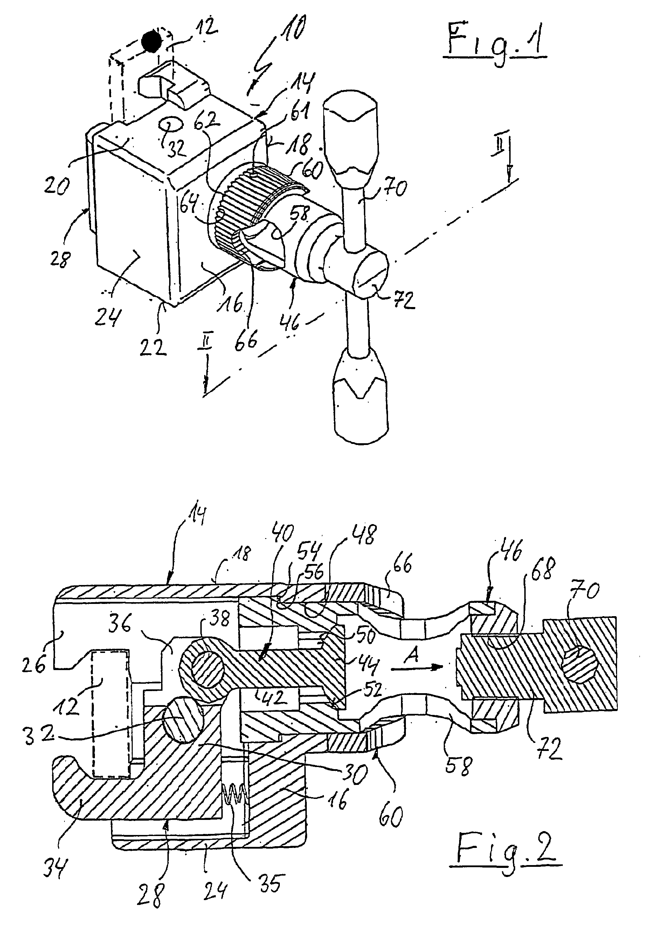

Die Figuren 1 und 2 zeigen eine erste Ausführungsform eines allgemein mit 10 bezeichneten Befestigungsklobens, der an einer gestrichelt angedeuteten Profilschiene 12 mit rechteckigem Querschnitt ansetzbar ist und der zur Halterung unterschiedlicher nicht dargestellter Zubehörteile an der Profilschiene 12 dient. Die Profilschiene 12 kann beispielsweise entlang der Patientenlagerfläche eines Operationstisches angeordnet sein.

Der Befestigungskloben 10 hat ein annähernd quaderförmiges Gehäuseteil 14 mit einer Vorderseite 16, einer Deckfläche 18, Seitenflächen 20 und 22 sowie einer Bodenfläche 24. An dem Gehäuseteil 14 ist auf der Rückseite desselben eine gehäusefeste Klaue 26 ausgebildet, welche die Profilschiene 12 in der in der Fig. 2 dargestellten Weise übergreifen kann, wenn der Befestigungskloben an dieser Profilschiene 12 angesetzt wird. Der gehäusefesten Klaue 26 ist ein bewegliches Klemmteil 28 zugeordnet, das in der Darstellung der Fig. 2 ein L-förmiges Profil hat und mit seinem einen L-Schenkel 30 auf eine die Seitenwände 20 und 22 durchsetzenden Welle 32 schwenkbar gelagert ist. Der andere L-Schenkel 34 ist ebenfalls klauenförmig ausgebildet und untergreift die Profilschiene 12, wie man dies in Fig. 2 erkennt. Das Klemmteil 34 wird durch eine Feder 35, die sich einerseits an der Rückwand des Gehäuseteiles 14 und andererseits an dem Klemmteil 28 abstützt, in die in der Fig. 2 dargestellte Klemmstellung vorgespannt.

Der erste L-Schenkel 30 des Klemmteiles 28 hat einen über die Welle 32 hinausragenden Fortsatz 36, an dem um eine zur Welle 32 parallelen Achse 38 eine Zugstange 40 schwenkbar gelagert ist. Diese hat einen Schaft 42, an dessen freiem Ende ein gegenüber dem Schaft 42 durchmessergrößerer Kopf 44 ausgebildet ist. Die Zugstange 40 greift in eine mit ihr co-axiale Spannhülse 46 ein, die in einer in der Vorderwand des Gehäuseteils 14 ausgebildeten Führung 48 axial verschiebbar geführt ist. Der Kopf 44 der Zugstange 40 hat an seiner der Achse 38 zugewandten Unterseite einen Kugelflächenabschnitt 50 und liegt auf einer die Zugstange 40 konzentrisch umgebenden komplementär geformten Lagerfläche 52 auf, die innerhalb der Spannhülse 46 ausgebildet ist. Die Spannhülse 46 ist innerhalb der Führung 48 des Gehäuseteiles 14 um ihre Achse frei drehbar und in axialer Richtung verschiebbar, wobei die axiale Bewegung in Auszugsrichtung, d.h. in Richtung des Pfeiles A in Fig. 2 durch das Anschlagen eines durchmessergrößeren Endabschnittes 54 der Spannhülse 46 an einer Stufe 56 in der Führung 48 begrenzt wird.

Die Spannhülse 46 hat in ihrem aus der Führung 48 zumindest teilweise herausragenden Bereich eine Durchbrechung 58, die sich senkrecht zur Längsachse der Spannhülse 46 erstreckt und durch die eine Halterungsstange eines nicht dargestellten einzuspannenden Zubehörteiles gesteckt werden kann. Der äußere Teil der Führung 48 ist von einem Zahnring 60 gebildet, der auf der Spannhülse 46 axial verschiebbar und durch einen in eine achsparallele Nut der Spannhülse 46 eingreifenden Radialstift 61 drehfest mit der Spannhülse 46 verbunden ist und der an seinem dem Gehäuseteil 14 zugewandten axialen Ende eine Zahnung 62 hat, die in Eingriff mit einer an dem Gehäuseteil 14 ausgebildeten Gegenzahnung 64 steht. Der Zahnring 60 hat ferner an seinem dem Gehäuseteil 14 abgewandten axialen Ende eine Aussparung 66, die so ausgebildet ist, daß sie mit einem Teil des Querschnittes der Durchbrechung 58 zur Deckung gebracht werden kann, wie dies insbesondere Fig. 1 zeigt. Eine in die Durchbrechung 58 gesteckte Stange greift also auch teilweise in die Aussparung 66 ein.

An dem dem Gehäuseteil 14 fernen Ende hat die Spannhülse 46 eine zur Längsachse der Spannhülse 46 co-axiale Gewindebohrung 68, in die eine mit einem Knebel 70 verbundene Knebelschraube 72 eingeschraubt ist.

In Gebrauch wird der Befestigungskloben 10 von schräg oben mit der am Gehäuseteil 14 ausgebildete Klaue 26 auf die Profilschiene 12 aufgesetzt. Der klauenförmige zweite L-Schenkel 34 des Klemmteils 28 steht dann an der Profilschiene 12 an. Durch die geometrische Anordnung des Klemmteils 28 entsteht ein das Klemmteil 28 in Öffnungsrichtung verschwenkendes Moment, wenn der aufgesetzte Befestigungskloben 10 nach unten in seine horizontale Lage gedrückt wird. Das Klemmteil 28 wird dabei geöffnet und schnappt anschließend über den unteren Rand der Profilschiene 12 in die in der Fig. 2 dargestellte Stellung. Wenn das Klemmteil 28 die Profilschiene umgreift, wird der Formschluß der Klauen 26 und 34 an der Profilschiene 12 durch die Feder oder Federn 35 unterstützt, durch die das Klemmteil 28 gegen die Profilschiene 12 gespannt wird. Bereits in dieser Situation können beliebig hohe Momente im Bereich der zugelassenen Belastung um beliebige Drehachsen den erzeugten Formschluß nicht mehr aufheben. Es ist also dadurch bereits eine Sicherheit im ungespannten Zustand gegeben.

Wird nun in die Durchbrechung 58 der Spannhülse 46 eine ein Zubehörteil tragende Stange eingesteckt und die Knebelschraube 72 mit Hilfe des Knebels 70 gedreht, so verkürzt sich der Raum zwischen dem Zahnring 60 und der Zubehörstange. Wenn der Raum so verringert ist, daß zwischen Knebelschraube 72, Zubehörstange und Zahnring 60 kein Platz mehr ist, bewegt sich die Spannhülse 46 von der Profilschiene weg. Hierdurch wird die Zugstange 40 ebenfalls in diese Richtung, d.h. in Richtung des Pfeiles A in Fig. 2 gezogen. Dadurch wiederum wird das Klemmteil 28 in der Fig. 2 im Uhrzeigersinn verschwenkt, d.h. mit seinem L-Schenkel 34 gegen die Profilschiene 12 gespannt. Der Befestigungskloben 10 wird an der Profilschiene 12 arretiert. Man erkennt, daß vor dem Anziehen der Knebelschraube durch Umsetzen des Zahnringes 60 eine beliebige Drehstellung der Zubehörstange relativ zum Gehäuseteil 14 vorgewählt und eingestellt werden kann, die dann durch das Festziehen der Knebelschraube 72 unverrückbar festgelegt wird.

Das Lösen des Befestigungsklobens 10 von der Profilschiene 12 erfolgt dadurch, daß die Knebelschraube 72 wieder aufgedreht wird, bis die eingesteckte Zubehörstange aus der Durchbrechung 58 herausgezogen werden kann. Durch axialen Druck auf die Knebelschraube 72 wird die Spannhülse 46 entgegen der Richtung des Pfeiles A in das Gehäuseteil 14 hineingeschoben. Die Spannhülse 46 drückt dann auf den L-Schenkel 30 des Klemmteiles 28, wodurch dieser entgegen dem Uhrzeigersinn in Fig. 2, d.h. in Öffnungsrichtung verschwenkt wird. Dann kann der Befestigungskloben 10 von der Profilschiene 12 abgenommen werden, indem er bei offengehaltenem Klemmteil 28 nach oben weggeschwenkt wird.

Wie die vorstehende Beschreibung zeigt, kann das Festlegen des Befestigungsklobens 10 an der Profilschiene 12 und das Einspannen eines Zubehörteiles über ein einziges Bedienelement in einem einzigen Spannvorgang bequem und sehr einfach von vorne ausgeführt werden, d.h. die Knebelschraube ist auch bequem zu erreichen. Nach dem Aufsetzen und Einrasten des Befestigungsklobens auf der Profilschiene 12 ist bereits ein sicherer Formschluß und eine gewisse Haftkraft des Befestigungsklobens 10 an der Profilschiene 12 gegen ein Verschieben desselben entlang der Schiene vorhanden. Durch das eingespannte Zubehör auftretende Momente erhöhen die Klemmkraft des Befestigungsklobens an der Profilschiene. Toleranzen der Profilschiene 12 können durch das Gewinde zum Spannen des Zubehörs bequem ausgeglichen werden. Der Befestigungskloben kann durch einen axialen Druck auf die Spannschraube oder Knebelschraube 72 und gleichzeitiges Abkippen von der Profilschiene 12 bequem gelöst werden.

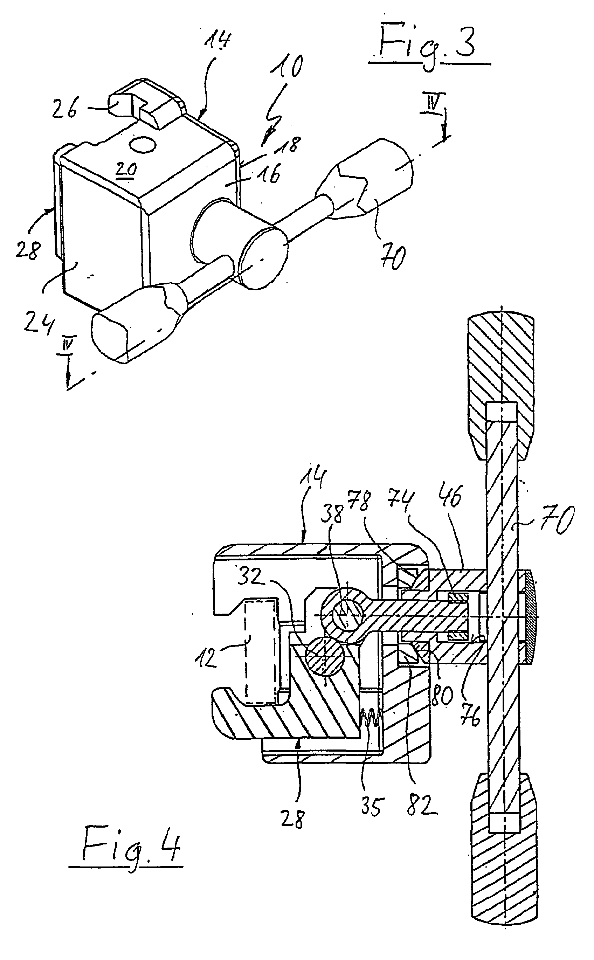

Bei dem in den Figuren 3 und 4 dargestellten Befestigungskloben sind gleiche Teile wieder mit gleichen Bezugszeichen versehen. Dieser Befestigungskloben ist zur formschlüssigen Verbindung mit Zubehörteilen bestimmt, d.h. die Zubehörteile werden an den Befestigungskloben beispielsweise angeschweißt. Dieser Befestigungskloben unterscheidet sich von der Ausführungsform gemäß den Figuren 1 und 2 durch seine Spannvorrichtung.

Auf das freie Ende der Zugstange 40 ist ein mit einem Außengewinde versehener Ring 74 aufgesetzt, der in eine Gewindebohrung 76 in der Spannhülse 46 eingreift. Die Spannhülse 46 hat an ihrer dem Gehäuseteil 14 zugewandten Seite einen Kugelflächenabschnitt 78, der an einer ringförmigen und komplementär geformten Lagerfläche 80 anliegt, die an einem gehäusefesten Ring 82 ausgebildet ist. Dadurch kann die Spannhülse 46 der Schwenkbewegung der Zugstange 40 beim Verstellen des Klemmteiles 28 folgen. Das Ansetzen des Befestigungsklobens an der Profilschiene 12 und das Spannen und Arretieren des Klemmteiles 28 erfolgt in der gleichen Weise, wie dies für die erste Ausführungsform oben beschrieben wurde. Zum Entfernen des Befestigungsklobens von der Profilschiene 12 wird die als Knebelschraube wirkende Spannhülse 46 in Öffnungsrichtung verdreht und anschließend in Richtung auf die Profilschiene 12 gedrückt. Dadurch wird das Klemmteil 28 über die Zugstange 40 in Öffnungsstellung, d.h. in Fig. 4 entgegen Uhrzeigersinn verschwenkt, so daß der Befestigungskloben 10 bequem von der Profilschiene 12 abgenommen werden kann.

## Patentansprüche

1. Befestigungskloben zur Halterung von Gegenständen an einer Profilschiene (12) mit zumindest annähernd rechteckigem Querschnitt, umfassend ein Gehäuseteil (14) mit mindestens einer gehäusefesten Klaue (26), die zum Übergreifen der Profilschiene (12) bestimmt ist derart, daß das Gehäuseteil (14) mit zur Profilschiene (12) parallelen Anlageflächen mindestens an zwei Flächen der Profilschiene (12) anliegt, ein L-förmiges, bewegliches Klemmteil (28), das mit seinem ersten L-Schenkel (30) um eine zu den Anlageflächen parallele erste Achse (32) an dem Gehäuseteil (14) schwenkbar gelagert und mittels einer Feder in eine Klemmstellung vorgespannt ist, in der es mit seinem als Klaue ausgebildeten zweiten L-Schenkel (34) die Profilschiene (12) umgreift, und eine Spannvorrichtung (40, 46, 72) zum Spannen und Arretieren des Klemmteiles (28) in der Klemmstellung, **dadurch gekennzeichnet, daß** an einem radial zur ersten Achse (32) gerichteten Betätigungsfortsatz (36) des ersten L-Schenkels (30) des Klemmteiles (28) um eine zur ersten Achse (32) parallele zweite Achse (38) eine Zugstange (40) der Spannvorrichtung schwenkbar angelenkt ist, die sich annähernd parallel zu dem zweiten L-Schenkel (34) erstreckt und daß die Spannvorrichtung eine Spannschraube (72) hat, die mit der Zugstange (40) zugfest gekoppelt ist und sich direkt oder indirekt an dem Gehäuseteil (14) abstützt.

2. Befestigungskloben nach Anspruch 1, **dadurch gekennzeichnet, daß** die Zugstange (40) mit einer Spannhülse (46) der Spannvorrichtung gekoppelt ist, die in einer zur Zugstangenachse co-axialen Gehäuseführung (48) axial verschiebbar geführt ist, in einem aus dem Gehäuseteil (14) mindestens teilweise herausragenden Abschnitt eine senkrecht zu ihrer Achse gerichtete Durchbrechung (58) hat und die an ihrem axial äußeren Ende eine co-axiale, die Durchbrechung (58) schneidende Gewindebohrung (68) hat, in die die mit einem Handgriff (70) versehene Spannschraube (72) eingreift.

3. Befestigungskloben nach Anspruch 2, **dadurch gekennzeichnet, daß** das äußere Ende der Gehäuseführung (48) von einem Rohrabschnitt gebildet ist, in dem eine zu dem axial äußeren Ende des Rohrabschnittes hin offene Aussparung (66) ausgebildet ist, die bei einer axialen Verschiebung der Spannhülse (46) mit einem Teil des Durchbrechungsquerschnittes zur Deckung gebracht wird.

4. Befestigungskloben nach Anspruch 3, **dadurch gekennzeichnet, daß** der Rohrabschnitt als Zahnring (60) ausgebildet ist, der die Spannhülse (46) umgibt und an seinem dem Gehäuseteil (14) zugewandten Ende eine Zahnung (62) hat, die mit einer Gegenzahnung (64) am Gehäuseteil (14) in Eingriff steht.

5. Befestigungskloben nach einem der Ansprüche 2 bis 4, **dadurch gekennzeichnet, daß** die Zugstange (40) an ihrem freien Ende einen gegenüber dem Stangenschaft (42) radial breiteren Kopf (44) hat, dessen dem Stangenschaft (42) zugewandte Fläche als Kugelflächenabschnitt (50) ausgebildet und zur Anlage an einer die Zugstange (40) ringförmig umgebenden komplementär geformten Lagerfläche (52) der Spannhülse (46) bestimmt ist.

6. Befestigungskloben nach Anspruch 1, **dadurch gekennzeichnet, daß** die Spannschraube in direktem Gewindeeingriff mit der Zugstange (40) steht.

7. Befestigungskloben nach Anspruch 6, **dadurch gekennzeichnet, daß** die Spannschraube eine sich an dem Gehäuseteil (14) drehbar abstützende und mit einem Handgriff (70) versehene Gewindehülse (46) umfaßt, die ein Innengewinde (76) hat, in das die mit einem Außengewinde (74) versehene Zugstange (40) eingreift.

8. Befestigungskloben nach Anspruch 7, **dadurch gekennzeichnet, daß** die Abstützfläche der Gewindehülse (46) als Kugelflächenabschnitt (78) ausgebildet ist, der an einer komplementär geformten Lagerfläche (80) des Gehäuseteiles (14) anliegt.

## Claims

1. Fastening block for mounting objects on a profiled rail (12) with an at least approximately rectangular cross section, the fastening block comprising a housing part (14) with at least one claw (26) attached to the housing and designed to enclose the profiled rail (12) in such a manner that the housing part (14) with application surfaces which are parallel to the profiled rail (12) is applied against at least two surfaces of the profiled rail (12), an L-shaped movable clamp part (28) which is attached with its first L-leg (30) on the housing part (14) in a manner so it can be swivelled about a first axis (32) which is parallel to the application surfaces, the clamp part being prestressed by means of a spring in a clamping position in which, with its second L-leg (34) which is designed in the form of a claw, it encloses the profiled rail (12), and a clamp device (40, 46, 72) for clamping and locking the clamp part (28) in the clamping position, **characterized in that**, on an actuation projection (36) which is oriented radially to the first axis (32) and which belongs to the first L-leg (30) of the clamp part (28), a pull rod (40) extending approximately parallel to the second L-leg (34) and belonging to the clamp device is coupled in a manner so it can be tilted about a second axis (38) which is parallel to the first axis (32), and **in that** the clamp device has a clamping screw (72), which is coupled to the pull rod (40) in a manner guaranteeing tensile strength and which is supported directly or indirectly on the housing part (14).

2. Fastening block according to claim 1, **characterized in that** the pull rod (40) is coupled with a clamping sleeve (46) of the clamp device, which clamping sleeve is guided in a manner that allows for axial shifting in a housing guide (48) which is coaxial to the pull rod axis, the clamping sleeve having a perforation (58) oriented perpendicularly to its axis in a section which extends at least partially out of the housing part (14) and a coaxial threaded bore (68) at its axially external end which threaded bore intersects the perforation (58) and into which threaded bore the clamping screw (72) which is provided with a handle (70) engages.

3. Fastening block according to claim 2, **characterized in that** the external end of the housing guide (48) is formed by a pipe section, in which a recess (66) is formed which is open toward the axial external end of the pipe section and which, during an axial shift of the clamping sleeve (46), comes into a position where it is aligned with a part of the perforation cross section.

4. Fastening block according to claim 3, **characterized in that** the pipe section is formed as a toothed ring (60) which surrounds the clamping sleeve (46) and which, on an end facing the housing (14), presents a toothing (62) which engages with a counter toothing (64) on the housing part (14).

5. Fastening block according to one of claims 2 to 4, **characterized in that** the pull rod (40), at its free end, has a radially broader head (44) as compared to the rod shaft (42) the surface of which head which faces the rod shaft (42) having the shape of a segment of a spherical surface (50) and the head being designed to abut a complementarily shaped bearing surface (52) of the clamping sleeve (46) which surrounds the pull rod (40) in an annular fashion.

6. Fastening block according to claim 1, **characterized in that** the clamping screw is in direct threaded engagement with the pull rod (40).

7. Fastening block according to claim 6, **characterized in that** the clamping screw includes a threaded sleeve (46) which is rotatably supported on the housing part (14) and provided with a handle (70) and which has an internal thread (76) in which the pull rod (40), which is provided with an external thread (74), engages.

8. Fastening block according to claim 7, **characterized in that** the support surface of the threaded sleeve (46) is designed in the shape of a segment of a spherical surface (78) which lies against a complementarily shaped bearing surface (80) of the housing part (14).

## Revendications

1. Etau de fixation destiné à maintenir des objets sur une glissière profilée (12) de section au moins à peu près rectangulaire, lequel étau comporte une pièce de boîtier (14) comportant
au moins une griffe (26) fixée au boîtier qui est destinée à s'accrocher par-dessus la glissière profilée (12) de telle sorte que la pièce de boîtier (14) présente des faces d'appui parallèles à la glissière profilée (12) qui portent sur au moins deux faces de la glissière profilée (12),
une pièce de serrage mobile (28) en forme de L, dont la première branche de L (30) est montée de façon à pouvoir pivoter autour d'un premier axe (32) parallèle aux faces d'appui et qui est précontrainte au moyen d'un ressort dans une position de serrage dans laquelle sa deuxième branche de L (34) conformée en griffe s'accroche sur la glissière profilée (12), et
un dispositif de serrage (40, 46, 72) destiné à serrer et bloquer la pièce de serrage (28) dans la position de serrage,
**caractérisé en ce qu'**une barre de traction (40) du dispositif de serrage, laquelle s'étend à peu près parallèlement à la deuxième branche de L (34), est articulée sur une saillie de commande (36) dirigée radialement par rapport au premier axe (32), de la première branche de L (30) de la pièce de serrage (28) de façon à pouvoir pivoter autour d'un deuxième axe (38) parallèle au premier axe (32), et **en ce que** le dispositif de serrage comporte une vis de serrage (72) qui est couplée à la barre de traction (40) de façon à résister à la traction et s'appuie directement ou indirectement sur la pièce de boîtier (14).

2. Etau de fixation selon la revendication 1, **caractérisé en ce que** la barre de traction (40) est couplée à un manchon de serrage (46) du dispositif de serrage, lequel manchon est guidé de façon à pouvoir se déplacer axialement dans un guide de boîtier (48) coaxial à l'axe de la barre de traction, **en ce qu'**elle comporte, dans une portion saillant au moins partiellement de la pièce de boîtier (14), un passage (58) dirigé perpendiculairement à son axe, et **en ce qu'**elle comporte à son extrémité axialement extérieure un taraudage coaxial (68) qui coupe le passage (58) et dans lequel s'engage la vis de serrage (72) dotée d'une poignée (70).

3. Étau de fixation selon la revendication 2, **caractérisé en ce que** l'extrémité extérieure du guide de boîtier (48) est formée par une portion tubulaire dans laquelle est conformé un évidement (66) qui est ouvert en direction de l'extrémité axialement extérieure de la portion tubulaire et qui est amené à recouvrement avec une partie de la section du passage lors d'un déplacement axial du manchon de serrage (46).

4. Etau de fixation sur la revendication 3, **caractérisé en ce que** la portion tubulaire est conformée en bague dentée (60) qui entoure le manchon de serrage (46) et qui comporte à son extrémité qui est dirigée vers la pièce de boîtier (14) une denture (62) qui est en prise avec une denture homologue (64) au niveau de la pièce de boîtier (14).

5. Etau de fixation selon l'une des revendications 2 à 4, **caractérisé en ce que** la barre de traction (40) comporte à son extrémité libre une tête (44), qui est radialement plus large que le tronc de barre (42) et dont la face qui est dirigée vers le tronc de barre (42) est conformée en portion de surface sphérique (50) et est destinée à porter contre une face de palier (52) du manchon de serrage (46), laquelle a une forme complémentaire et entoure annulairement la barre de traction (40).

6. Etau de fixation selon la revendication 1, **caractérisé en ce que** la vis de serrage est en engagement direct par serrage avec la barre de traction (40).

7. Etau de fixation selon la revendication 6, **caractérisé en ce que** la vis de serrage comporte un manchon fileté (46) qui s'appuie à rotation sur la pièce de boîtier (14) et qui est doté d'une poignée (70), lequel manchon fileté comporte un filetage intérieur (76) dans lequel s'engage la barre de traction (40) dotée d'un filetage extérieur (74).

8. Etau de fixation selon la revendication 7, **caractérisé en ce que** la face d'appui du manchon fileté (46) est conformée en portion de surface sphérique (78) qui porte contre une face de palier (80), de forme complémentaire, de la pièce de boîtier (14).
